# EUROPEAN PATENT APPLICATION

(11) **EP 3 712 007 A1**
(43) Date of publication of application: **23.09.2020**
(21) Application number: 19883901.1
(22) Date of filing: 15.11.2019
(51) Int. Cl.: B60L 58/10, H02J 7/00

(54) **CONVERSION CIRCUIT, BATTERY EQUALIZATION SYSTEM, AND BATTERY MANAGEMENT SYSTEM**

(30) Priority: 16.11.2018 CN 201811372030
(71) Applicant: Contemporary Amperex Technology Co., Limited, Fujian PRC 352100 (CN)
(72) Inventor: DAN, Zhimin, Ningde, Fujian 352100 (CN); SHI, Delong, Ningde, Fujian 352100 (CN); HOU, Yizhen, Ningde, Fujian 352100 (CN); ZHANG, Wei, Ningde, Fujian 352100 (CN); WANG, Liansong, Ningde, Fujian 352100 (CN)
(74) Representative: Barker Brettell LLP
(86) International application number: PCT/CN2019/118891
(87) International publication number: WO 2020/098798

(57) **Abstract**

The present application provides a conversion circuit, a battery balancing system and a battery management system. The conversion circuit includes a high-voltage isolated power source, a wake-up unit and a configuration unit. The high-voltage isolated power source is connected to two electrodes of a battery pack and is configured to convert high voltage power output from the battery pack into low voltage power so as to supply power for a battery management system of the battery pack. The wake-up unit is configured to regularly wake up the high-voltage isolated power source to enable the high-voltage isolated power source to operate. The configuration unit is configured to send timing information to the wake-up unit when the battery management system is powered down. The technical solutions in embodiments of the present application enable the battery management system to be waked up and operate in case of no power supply from a lead-acid battery.

## Description

### CROSS REFERENCE TO RELATED APPLICATIONS

This application claims priority from Chinese Patent Application 201811372030.X entitled "Conversion Circuit, Battery Balancing System and Battery Management System" filed on November 16, 2018, the entire contents of which are incorporated herein by reference.

### FIELD

The present application relates to the field of battery, and particularly to a conversion circuit, a battery balancing system and a battery management system.

### BACKGROUND

At present, development of electric vehicles subjects to battery life constraints. Manufacturers of electric vehicles often expand battery pack capacity (a number of battery cells) to increase the endurance mileage of the electric vehicles. Due to different manufacturing processes or use environments, the power of each battery cell in the battery pack may be inconsistent during operation, resulting in a reduced service life of the battery pack. Therefore, it is necessary to balance the battery cells to maintain the same power of each cell in the battery pack.

Most battery management systems (Battery Management System, BMS) in the prior art use a passive balancing method to balance the battery cells. The passive balancing means that a shunt resistor is connected in parallel to each battery cell to consume excess power in the battery cell with a large capacity. The implementation of the passive balancing method usually requires a lead-acid battery to supply power for the BMS. Because the lead-acid battery has a large static leakage current, the lead-acid battery will be turned off when the electric vehicle is not in operation for a long time, in order to prevent the lead-acid battery from losing power due to the large static leakage current and having a reduced service life.

Therefore, the electric vehicles cannot perform balancing during non-operating hours because the lead-acid battery is turned off. How to enable the BMS to wake up and operate in case of no power supply from the lead-acid battery has become a problem to be solved.

### SUMMARY

The embodiments of the present application provide a conversion circuit, a battery balancing system and a battery management system, which enable a BMS to wake up and operate in case of no power supply from a lead-acid battery.

In a first aspect, the embodiments of the present application provides a conversion circuit comprising a high-voltage isolated power source, a wake-up unit, and a configuration unit. The high-voltage isolated power source is connected to two electrodes of a battery pack and is configured to convert high voltage power output from the battery pack into low voltage power so as to supply power for a battery management system of the battery pack. The wake-up unit is configured to regularly wake up the high-voltage isolated power source to enable the high-voltage isolated power source to operate. The configuration unit is configured to send timing information to the wake-up unit when the battery management system is powered down.

In a possible implementation of the first aspect, the configuration unit is provided in the battery management system.

In a possible implementation of the first aspect, the wake-up unit is configured to receive the timing information through isolated communication when receiving the timing information from the configuration unit.

In a possible implementation of the first aspect, the configuration unit is further configured to detect an interrupt flag bit of the wake-up unit, and to set an unset interrupt flag bit.

In a possible implementation of the first aspect, the wake-up unit includes a clock chip, which is supplied with power by a button battery or a regulated power source. The regulated power source includes a voltage stabilizing element and a resistance element. A first end of the voltage stabilizing element is grounded, a second end of the voltage stabilizing element is connected to the clock chip, a first end of the resistance element is connected to a positive electrode of the battery pack, and a second end of the resistance element is also connected to the clock chip.

In a possible implementation of the first aspect, the voltage stabilizing element is a voltage stabilizing diode.

In a possible implementation of the first aspect, the clock chip is supplied with power by the battery management system after the battery management system is powered on.

In a possible implementation of the first aspect, the clock chip is configured to receive the power supplied by the battery management system through low-voltage isolation, when the clock chip is supplied with power by the battery management system.

In a second aspect, the embodiments of the present application provides a battery balancing system for a battery pack. The battery pack includes a plurality of battery cells. The battery balancing system includes a plurality of balancing units, a battery management system, and the conversion circuit as described above. The plurality of balancing units are provided in one-to-one correspondence with the plurality of battery cells and configured to collect state data of corresponding battery cells and perform balancing operations on the battery cells. The battery management system is waked up by the conversion circuit in case of no power supply from a lead-acid battery, identifies, based on the state data, a target battery cell on which a balancing operation needs to be performed, and sends a balancing instruction to a balancing unit corresponding to the target battery cell.

In a possible implementation of the second aspect, the battery management system performs a power-off operation when there is no battery cell on which the balancing operation needs to be performed.

In a third aspect, the embodiments of the present application provide a battery management system. The battery management system includes the configuration unit as described above.

When the conversion circuit in the embodiments of the present application is in operation, the wake-up unit generates an interrupt after timing to a set time, and outputs a high level or a low level through an interrupt output end to wake up the high-voltage isolated power source. The high-voltage isolated power source converts high voltage power from the battery pack into low voltage power so as to supply power for the BMS, thereby replacing the lead-acid battery to supply power for the BMS, and preventing the lead-acid battery from losing power due to the large static leakage current and having a reduced service life.

### BRIEF DESCRIPTION OF THE DRAWINGS

Features, advantages, and technical effects of exemplary embodiments of the present application will be described below with reference to attached drawings.
Fig. 1 is a schematic structural diagram of a conversion circuit according to a first embodiment of the present application;
Fig. 2 is a schematic structural diagram of a conversion circuit according to a second embodiment of the present application;
Fig. 3 is a schematic structural diagram of a conversion circuit according to a third embodiment of the present application;
Fig. 4 is a schematic structural diagram of a battery balancing system according to a fourth embodiment of the present application.

### DETAILED DESCRIPTION

The implementations of the present application are described in further detail below with reference to the attached drawings and embodiments. The following detailed description of the embodiments and the drawings are intended to illustrate principles of the present application, but are not intended to limit the scope of the present application, that is, the present application is not limited to the described embodiments.

The embodiments of the present application provide a conversion circuit, a battery balancing system and a battery management system, which can wake up a Battery Management System (Battery Management System, BMS) to perform a balancing function on the battery pack in case of no power supply from the lead-acid battery, thereby improving the performance of the battery pack and extending its service life.

It should be noted that the battery pack in the embodiments of the present application may include one or more battery modules, and each battery module includes at least one battery cell. The battery cell may be a lithium-ion battery, a lithium metal battery, a lead-acid battery, a nickel-cadmium battery, a nickel-hydride battery, a lithium-sulfur battery, a lithium-air battery, or a sodium-ion battery, which is not limited herein.

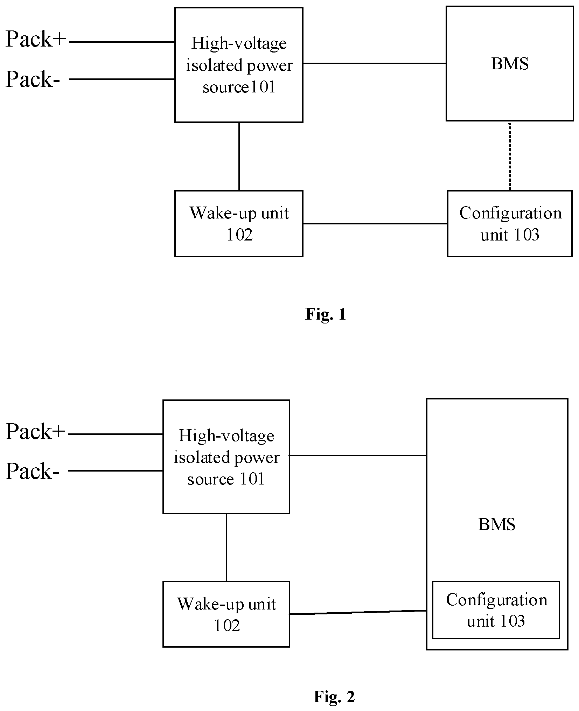

Fig. 1 is a schematic structural diagram of a conversion circuit according to a first embodiment of the present application. As shown in Fig. 1, the conversion circuit includes a high-voltage isolated power source 101, a wake-up unit 102, and a configuration unit 103.

The high-voltage isolated power source 101 is connected to two electrodes (Pack + and Pack-) of the battery pack, and configured to convert high voltage power output from the battery pack into low voltage power so as to supply power for the BMS of the battery pack. The wake-up unit 102 is configured to wake up the high-voltage isolated power source 101 regularly, so as to make the high-voltage isolated power source 101 operate. The configuration unit 103 is configured to send timing information to the wake-up unit 102 when the BMS is powered down.

When the conversion circuit in the embodiments of the present application is in operation, the wake-up unit 102 generates an interrupt after timing to a set time, and outputs a high or low level through an interrupt output end to wake up the high-voltage isolated power source 101. The high-voltage isolated power source 101 converts the high voltage power of the battery pack into the low voltage power to supply power for the BMS, thereby replacing the lead-acid battery to supply power for the BMS, and preventing the lead-acid battery from losing power due to large static leakage current and having a reduced service life.

In some embodiments, the configuration unit 103 may be a device with an independent operation function, which can detect whether the BMS is powered down and can send timing information to the wake-up unit 102 when the BMS is powered down.

In some embodiments, referring to Fig. 2, Fig. 2 is a schematic structural diagram of a conversion circuit according to a second embodiment of the present application. The configuration unit 103 may also be provided in the BMS. It may also be understood that the BMS integrates a function of the configuration unit.

In some embodiments, in order to prevent the timing information from being interfered by other signals of the BMS, when the wake-up unit 102 receives the timing information from the configuration unit 103 in the BMS, it receives the timing information through isolated communication. Exemplarily, a communication connection between the wake-up unit 102 and the configuration unit 103 may be established using an isolated communication chip.

In some embodiments, the wake-up unit 102 may be a clock chip, such as a Real-Time Clock (Real-Time Clock, RTC) chip. The RTC needs to have a function of generating an interrupt regularly, and can control enabling of the high-voltage isolated power source 101 by outputting a high level or a low level. Correspondingly, the high-voltage isolated power source 101 may be a high-voltage power source chip with an enable function.

In some embodiments, the configuration unit 103 may also detect an interrupt flag bit of the RTC while sending the timing information to the RTC. When it is detected that the interrupt flag bit is not set, the unset interrupt flag bit may be set in time to improve control accuracy of the conversion circuit.

In an embodiment, the RTC can be powered by a button battery or a regulated power source.

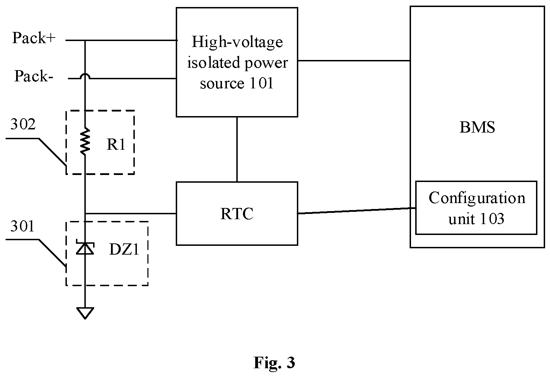

Fig. 3 is a schematic structural diagram of a conversion circuit according to a third embodiment of the present application, which is used to specifically show the component structure composition of the regulated power source for supplying power to the RTC.

As shown in Fig. 3, the regulated power source includes a voltage stabilizing element 301 and a resistance element 302. A first end of the voltage stabilizing element 301 is grounded, a second end of the voltage stabilizing element 301 is connected to the RTC, a first end of the resistance element 302 is connected to the positive electrode Pack + of the battery pack, and a second end of the resistance element 302 is also connected to the RTC.

In an example of Fig. 3, the voltage stabilizing element 301 specifically includes a voltage stabilizing diode DZ1, and the resistance element 302 specifically includes a resistance network R1 with one or more resistors therein. The end of the voltage stabilizing diode DZ1 far from the ground can be maintained at a constant voltage, so as to supply power to the RTC when the RTC has no separate power source. When the lead-acid battery is provided for power supply and the high-voltage isolated power source is not in operation, the BMS system can supply power to the RTC through a low-voltage isolated power source, so as to set the wake-up time after power-down of the BMS .

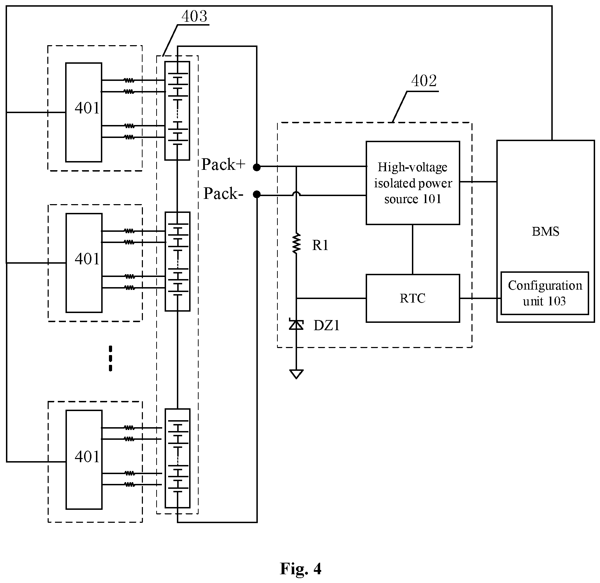

FIG. 4 is a schematic structural diagram of a battery balancing system according to a fourth embodiment of the present application. As shown in FIG. 4, the battery balancing system includes a plurality of balancing units 401, a BMS, and a conversion circuit 402.

The plurality of balancing units 401 are provided in one-to-one correspondence with a plurality of battery cells. The balancing unit 401 can collect state data of the corresponding battery cell, and send the collected state data to the BMS. The balancing unit 401 is also an execution module for battery cell balancing, which can directly control the battery cell to perform a passive balancing function.

The conversion circuit 402 is a conversion circuit as described in Figs. 1-3. The battery pack 403 is also shown in Fig. 4. The BMS is waked up by the conversion circuit 402 and supplied with power by the conversion circuit 402 in combination with the battery pack 403 in case of no power supply from the lead-acid battery.

The BMS can determine whether the battery pack 403 needs to be balanced and which battery cell needs to be balanced based on the received battery state data, and send a balancing instruction to the balancing unit 401 corresponding to the target battery cell. The corresponding balancing unit 401 performs a passive balancing operation on the battery cell.

In some embodiments, the BMS is further configured to perform a power-down operation when there is no battery cell on which the balancing operation needs to be performed, thereby avoiding power wastage.

The embodiments of the present application further provides a battery management system BMS, which includes a configuration unit 103 (see Fig. 2 to Fig. 4), or the BMS is integrated with a function of sending timing information to the wake-up unit 102 when the BMS is powered down.

Although the present application has been described with reference to the preferred embodiments, various modifications may be made thereto and components therein may be replaced with equivalents without departing from the scope of the present application. In particular, various technical features mentioned in each embodiment may be combined in any manner as long as there is no structural conflict. The present application is not limited to the particular embodiments disclosed herein, but covers all technical solutions falling within the scope of the claims.

## Claims

1. A conversion circuit, comprising: a high-voltage isolated power source, a wake-up unit and a configuration unit, wherein:
the high-voltage isolated power source is connected to two electrodes of a battery pack, and is configured to convert high voltage power output from the battery pack into low voltage power so as to supply power for a battery management system of the battery pack;
the wake-up unit is configured to regularly wake up the high-voltage isolated power source to enable the high-voltage isolated power source to operate;
the configuration unit is configured to send timing information to the wake-up unit when the battery management system is powered down.

2. The conversion circuit of claim 1, wherein the configuration unit is provided in the battery management system.

3. The conversion circuit of claim 2, wherein when the wake-up unit is configured to receive the timing information through isolated communication when receiving the timing information from the configuration unit.

4. The conversion circuit of claim 1, wherein the configuration unit is further configured to detect an interrupt flag bit of the wake-up unit, and to set an unset interrupt flag bit.

5. The conversion circuit of claim 1, wherein the wake-up unit comprises a clock chip which is supplied with power by a button battery or a regulated power source, and wherein:
the regulated power source comprises a voltage stabilizing element and a resistance element, a first end of the voltage stabilizing element is grounded, a second end of the voltage stabilizing element is connected to the clock chip, a first end of the resistance element is connected to a positive electrode of the battery pack, and a second end of the resistance element is also connected to the clock chip.

6. The conversion circuit of claim 5, wherein the voltage stabilizing element is a voltage stabilizing diode.

7. The conversion circuit of claim 5, wherein the clock chip is supplied with power by the battery management system after the battery management system is powered on.

8. The conversion circuit of claim 7, wherein the clock chip is configured to receive the power supplied by the battery management system through low-voltage isolation, when the clock chip is supplied with power by the battery management system.

9. A battery balancing system for a battery pack, the battery pack comprising a plurality of battery cells, wherein the battery balancing system comprises a plurality of balancing units, a battery management system, and the conversion circuit according to any one of claims 1-8, and wherein:
the plurality of balancing units are provided in one-to-one correspondence with the plurality of battery cells, and configured to collect state data of corresponding battery cells and perform balancing operations on the battery cells;
the battery management system is configured to be waked up by the conversion circuit in case of no power supply from a lead-acid battery, identify, based on the state data, a target battery cell on which a balancing operation needs to performed, and send a balancing instruction to a balancing unit corresponding to the target battery cell.

10. The battery balancing system of claim 9, wherein the battery management system is configured to perform a power-down operation when there is no battery cell on which a balancing operation needs to be performed.

11. A battery management system, comprising the configuration unit according to claim 1 or claim 4.
